# FASCICULE DE BREVET EUROPEEN

(11) **EP 3 075 686 B1**
(45) Date de publication et mention de la délivrance du brevet: **10.06.2020**
(21) Numéro de dépôt: 16163480.3
(22) Date de dépôt: 01.04.2016
(51) Int. Cl.: B65G 47/244

(54) **DISPOSITIF ET MÉTHODE DE ROTATION DE PRODUIT**
VORRICHTUNG UND VERFAHREN ZUR ROTATION VON ARTIKELN
SYSTEM AND METHOD FOR ROTATION OF PRODUCTS

(30) Priorité: 02.04.2015 FR 1552857
(43) Date de publication de la demande: 05.10.2016
(73) Titulaire: Sidel Engineering & Conveying Solutions, 67116 Reichstett (FR)
(72) Inventeur: BERGER, Julien, 67116 REICHSTETT (FR)
(74) Mandataire: Sidel Group

(56) Documents cités:
- EP-A1- 0 486 043
- CN-U- 201 512 303
- FR-A1- 2 560 115
- JP-A- S61 155 118
- US-A- 4 063 632
- US-A- 4 437 560

## Description

La présente invention relève du domaine du convoyage au sein d'une ligne de conditionnement, et a pour objet, d'une part, un dispositif d'orientation de produits, et, d'autre part, un procédé mettant en œuvre ce dispositif.

Dans ce domaine, les produits convoyés sont généralement des caisses, boîtes, cartons, packs, fardeaux, etc., circulant au moins localement en colonne unifilaire sur des convoyeurs à bande sans fin généralement horizontaux entre des postes de traitement. Ce type de produit présente bien souvent, vu de haut, une base rectangulaire, avec un côté plus petit que l'autre.

Les produits sont généralement fournis à un poste de traitement du type machine de palettisation, qui doit alors organiser les produits en couches successives sur une palette, voire fournis à une suremballeuse, qui doit alors organiser les packs dans un groupe de packs. L'agencement des produits requiert alors bien souvent qu'ils n'aient pas tous la même orientation, certains étant tournés d'un quart de tour par rapport aux autres.

Ainsi, en amont d'un tel poste de traitement, il est nécessaire d'intégrer un moyen de rotation de produits, qui peut provoquer une rotation d'un quart de tour autour d'un axe vertical pour au moins certains d'entre eux.

De tels moyens ont déjà été proposés dans l'art antérieur. Ainsi, on connaît par exemple DE4418359 qui divulgue une installation dans laquelle les produits sont référencés contre un guide grâce à des convoyeurs obliques, puis éventuellement tournés autour de l'axe vertical grâce à un jeu de rouleaux d'entraînement qui tournent à des vitesses différentes. Une telle réalisation est néanmoins couteuse et complexe, et nécessite en outre de grands changements pour son implémentation dans une ligne déjà existante.

WO9218388 propose une réalisation plus simple à partir d'une courroie latérale munie de taquets qui peuvent, le cas échéant coopérer avec un produit pour le faire tourner. Ce principe est néanmoins peu fiable compte tenu de la souplesse de la courroie et est difficile à adapter en cas de changement de format de produits.

DE10123081 ainsi que DE10261551 proposent un principe de butées pivotantes en forme de cadres qui viennent coopérer avec un produit à faire tourner. La construction de ces butées et/ou le contrôle de leur fonctionnement donne sa sélectivité à ce principe, pour ne faire pivoter que certains produits. Ces butées doivent néanmoins être modifiées structurellement à l'occasion d'un changement de format de produit.

DE202004020092 propose enfin une solution de retournement basée sur un entraînement local à base de cônes dont les génératrices entraînent les produits, ce qui pour effet d'imposer aux produits une vitesse de rotation longitudinale qui varie transversalement et de l'amener ainsi à effectuer une rotation autour de l'axe vertical. L'amplitude du mouvement de rotation est cependant difficilement contrôlable.

Des principes à base de butées fixes ont aussi été imaginés. Des réalisations possibles se basent par exemple sur une butée qui vient s'insérer par le côté dans le flux de produits, par exemple à mi hauteur, pour que la progression du produit ne soit pas possible du côté de ladite butée, mais uniquement possible du côté opposé, générant alors la rotation souhaitée grâce à un différentiel de vitesse longitudinale. Un autre principe à base de butée fixe est proposé dans DE102006011585, où les produits à tourner viennent être entourés dans un cadre qui présente une partie saillante, qui, elle, vient être bloquée par une butée fixe et générer la rotation de tout le produit. Un principe à base de butée fixe est néanmoins peu contrôlable en termes d'amplitude de la rotation, et peut surtout créer des chocs dommageables dès lors que les cadences sont élevées et les produits fragiles, comme des packs de bouteille en verre, par exemple. EP 0 486 043 A1 divulgue un dispositif d'orientation selon le préambule de la revendication 1.

L'invention vise ainsi à proposer une solution pour tourner de des produits autour de l'axe perpendiculaire au plan de convoyage, qui soit autant que possible fiable, peu onéreuse, simple à installer, versatile quant aux changements de formats de produits, et contrôlable.

Pour ce faire, l'invention propose de retenir les produits avec un élément contrôlé, mobile perpendiculairement au plan de convoyage mais immmobile dans la direction de convoyage, et venant interagir avec la surface de fond extérieure du produit, pour laisser l'entraînement du convoyeur provoquer la rotation du produit.

L'invention a ainsi pour objet un dispositif d'orientation de produits selon la revendication 1, comprenant, d'une part, un moyen de convoyage pour déplacer, dans une direction de convoyage longitudinale, lesdits produits reposant sur lui par leur partie inférieure au niveau d'un plan de convoyage, et, d'autre part, un moyen d'action créant un différentiel de vitesse longitudinale provoquant une rotation autour d'un axe perpendiculaire au plan de convoyage.

Le moyen d'action comprend un bloc fixe dans la direction de convoyage et mobile à travers le plan de convoyage, formant, de façon sélective, par sa partie supérieure, une surface en contact avec le dessous des produits.

L'invention a aussi pour objet, selon la revendication 7, une méthode de mise en œuvre par ce dispositif, à savoir un procédé d'orientation de produits qui circulent dans un plan de convoyage grâce à un moyen de convoyage sur la surface supérieure duquel ils reposent, procédé au cours duquel lesdits produits sont, de façon sélective, tournés autour d'un axe perpendiculaire au plan de convoyage, ledit procédé comprenant pour ce faire une étape de manœuvre d'un moyen d'action comprenant un bloc mobile et au cours de laquelle ledit bloc mobile passe d'une position inactive, dans laquelle il n'interagit pas avec les produits, à une position active, dans laquelle il interagit avec eux pour en provoquer la rotation.

La manœuvre du moyen d'action consiste essentiellement à faire traverser le plan de convoyage au bloc, de sorte que, dans sa position inactive, il se trouve escamoté sous le plan de convoyage, et, dans sa position active, il s'étend du même côté du plan de convoyage que les produits pour toucher par l'extérieur le fond du produit à faire tourner.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre une réalisation possible avec un bloc monté à l'extrémité d'un excentrique déplacé par un moteur ;
- la figure 2 schématise un dispositif selon l'invention pour tourner des produits initialement orientés avec la grande longueur de leur base transversale à la direction de convoyage : la figure 2A montre le dispositif sans produit et la figure 2B le montre avec des produits ;
- la figure 3 schématise un dispositif selon l'invention pour tourner des produits initialement orientés avec la petite longueur de leur base transversale à la direction de convoyage : la figure 3A montre le dispositif sans produit et la figure 3B le montre avec des produits ;
- la figure 4 montre un détail de la partie d'extrémité du bloc, et
- la figure 5 montre l'inclinaison créée par le mouvement du bloc, dans une vue parallèle à la direction de convoyage.

L'invention a donc tout d'abord comme objet un dispositif d'orientation 1 de produits 2 comprenant, d'une part, un moyen de convoyage 3 pour déplacer, dans une direction de convoyage 4 longitudinale, lesdits produits 2 reposant sur lui par leur partie inférieure au niveau d'un plan de convoyage 5, et, d'autre part, un moyen d'action créant un différentiel de vitesse longitudinale provoquant une rotation autour d'un axe 7 perpendiculaire au plan de convoyage 5. Sous l'effet du moyen d'action, le produit 2 est alors soumis uniquement à un entraînement non symétrique par le moyen de convoyage 3 avec lequel une partie du fond extérieur du produit 2 est en contact. Cet entraînement longitudinal, conjugué avec le maintien en position longitudinale par le bloc 6, a alors pour effet de faire tourner le produit autour de l'axe de rotation 7, perpendiculaire au plan de convoyage 5 formé par la surface supérieure du moyen de convoyage 3.

On comprend donc que le moyen d'action a pour effet de s'opposer localement à la progression des produits 2 sous l'effet du moyen de convoyage 3. Le moyen d'action retient successivement les produits 2, dans la direction de convoyage 4, de façon dissymétrique par rapport à sa surface de base. Le moyen d'action freine voire stoppe les produits 2 dans leur mouvement longitudinal au niveau d'une zone excentrée par rapport à la base du produit 2, préférablement sur le côté. On obtient ainsi, dans le sens transversal, un différentiel de vitesse longitudinale qui a pour effet de faire tourner le produit 2 autour de l'axe 7.

Le moyen de convoyage 3 est préférablement du type à bande sans fin, chaîne, tapis ou équivalent, et les produits 2 reposent donc sur sa surface supérieure. Le plan de convoyage 5 est notamment horizontal et formé par la partie supérieure du moyen de convoyage 3, le bloc 6 étant donc mobile dans une direction verticale. Le mouvement des produits 2 par rapport au référentiel fixe dépend donc de la surface qui est emportée par le moyen de convoyage 3. Il suffit donc d'arrêter l'entraînement sur une partie du produit 2 et de le laisser être entraîné par le moyen de convoyage 3 sur le reste. La non symétrie de l'entraînement longitudinal provoque alors la rotation du produit 2.

Selon l'invention, le moyen d'action comprend un bloc 6 fixe dans la direction de convoyage 4 et mobile à travers le plan de convoyage 5, formant, de façon sélective, par sa partie supérieure, une surface en contact avec le dessous des produits 2. Ainsi, le bloc 6 vient au contact du fond du produit 2 par l'extérieur, et ce de façon décalée par rapport au centre de gravité dudit produit 2, de sorte que ledit fond du produit 2 s'incline et est en contact, d'une part, avec le bloc 6 immobile longitudinalement, et, d'autre part, avec le moyen de convoyage 3 mobile longitudinalement.

En position rétractée, le bloc 6 se trouve donc entièrement sous le plan de convoyage 5 et ne gêne en rien la progression des produits 2. En position active, il vient au contact de la surface extérieure du fond du produit 2, plutôt qu'en butée contre une face verticale du produit 2, ce qui évite les chocs. Le fonctionnement du bloc 6 est sélectif et il peut donc n'agir que sur certains produits 2 pour les tourner, et en laisser d'autres circuler sans en modifier l'orientation. Le bloc 6 peut être monté pour se déplacer à travers le plan de convoyage 5 à côté du moyen de convoyage 3, ou encore dans son prolongement. Vu perpendiculairement au plan de convoyage 5, le bloc 6 peut aussi se trouver au sein de la surface de convoyage.

Le bloc 6 a donc une position inactive, dans laquelle il se trouve entièrement d'un côté du plan de convoyage 5 et n'interfère donc pas avec les produits 2, ainsi qu'une position active, dans laquelle il s'étend du même côté du plan de convoyage 5 que les produits 2, et peut alors les décaler localement verticalement dudit plan.

Le dispositif comprend, en outre, un capteur de produit 2 monté en amont du moyen d'action et fournissant un signal représentant la circulation des produits 2 qui est pris en compte par une unité de contrôle dudit dispositif pour piloter le fonctionnement du moyen d'action entre la position active et la position inactive du bloc 6. Comme il sera encore décrit plus loin, le bloc 6 est piloté pour arriver au contact de la surface inférieure 14, extérieure, et non contre une surface frontale du produit 2.

Selon une caractéristique additionnelle possible, le bloc 6 est mobile, en outre, par rotation autour d'un axe de rotation 7 perpendiculaire au plan de convoyage 5, de sorte à accompagner le mouvement de rotation autour de cet axe du produit 2 qui repose temporairement entre autres sur lui. Cela permet d'éviter les frottements provoqués par une manœuvre par le dessous, et donc de maîtriser correctement l'angle de rotation avec l'amplitude du mouvement du moyen de convoyage 3.

Selon une autre caractéristique additionnelle possible, le moyen d'action comprend, en outre, un capteur pour mesurer la rotation du bloc 6 autour de son axe de rotation 7, ce qui permet de contrôler la bonne exécution de la rotation du produit 2 et de rétracter le bloc 6 dès que la rotation atteint l'amplitude souhaitée, généralement un quart de tour. Il suffit pour cela de monter le bloc 6 sur un arbre fixe en rotation, et de mesurer la rotation du bloc 6 par rapport à cet arbre fixe. L'angle de rotation détecté est ensuite pris en compte pour piloter le mouvement vertical du bloc 6 depuis sa position active vers sa position escamotée.

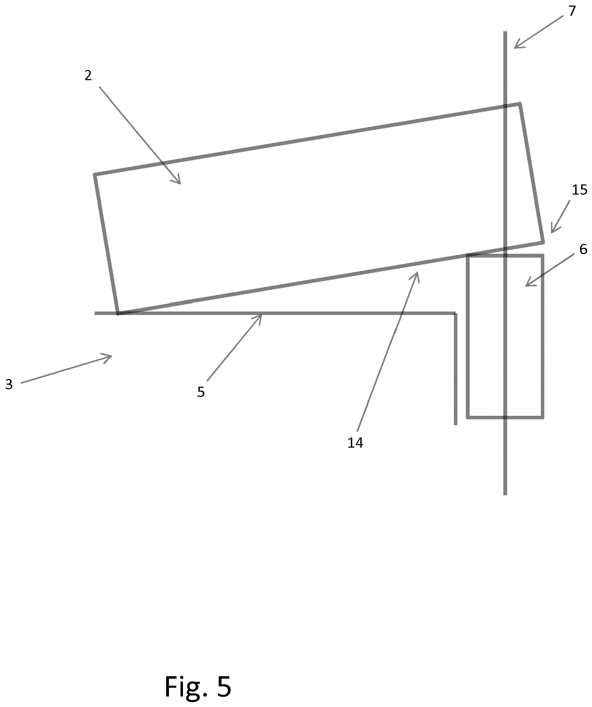

Selon l'invention, le moyen d'action se trouve à côté du moyen de convoyage 3, transversalement à la direction de convoyage 4, et le dispositif d'orientation 1 comprend en outre un guide longitudinal 8, positionné pour pousser transversalement les produits 2 en direction du moyen d'action, de sorte qu'au moins une partie d'entre eux en arrive à circuler à hauteur du bloc 6. Une partie du produit 2 repose alors sur le bloc 6 lorsque celui-ci est en position active. Comme le montre la figure 5, sous l'effet du bloc 6, le produit 2 se décale de la surface supérieure du moyen de convoyage 3 et se penche par une rotation de très faible amplitude autour de la direction de convoyage 4.

Avec un guide 8 fixe, tous les produits 2 avec la même orientation se retrouvent à circuler au droit du bloc 6, qui peut être manœuvré de façon sélective. De façon générale, d'autres solutions sont envisageables pour amener les produits 2 au niveau du bloc 6, éventuellement de façon sélective.

Selon une autre caractéristique additionnelle possible, le moyen d'action comprend, d'une part, un moteur 10 électrique piloté assurant le mouvement du bloc 6 perpendiculairement au plan de convoyage 5, et, d'autre part, une transmission 11 de mouvement utilisant un excentrique 9 pour transformer la rotation du moteur 10 en mouvement linéaire du bloc 6. L'intérêt de recourir à un moteur 10 électrique, préférablement synchrone ou encore appelé « brushless », est que ce type d'équipement est très contrôlable et peut donc assurer les fonctions attendues dans une telle application de retournement de produit 2. De façon générale, un actionneur contrôlé pour effectuer le mouvement perpendiculaire au plan de convoyage 5 est satisfaisant, comme par exemple, alternativement, un vérin linéaire électrique, etc. L'utilisation d'une énergie léectrique plutôt que d'une énergie pneumatique permet notamment un contrôle plus précis ainsi que la réalisation contrôlée de mouvements d'amplitude intermédiaire.

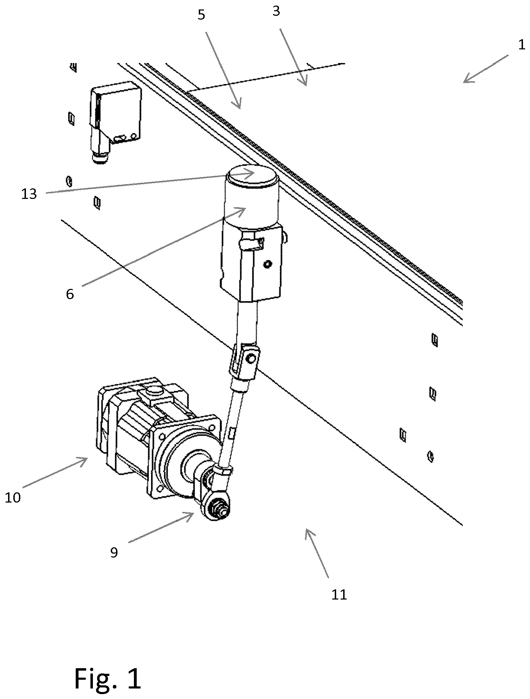

Comme le montre la figure 1, l'ensemble formé du moteur 10, de la transmission 11 et du bloc 6 peut être monté sur le côté du moyen de convoyage 3, et donc sans nécessiter une reconception dudit moyen de convoyage 3. Il suffit alors de prévoir un guide longitudinal 8 de forme adaptée pour décaler au-delà de la surface de convoyage les produits 2 à faire tourner, et un moyen de convoyage 3 peut alors facilement être adapté pour remplir une fonction de pivotement.

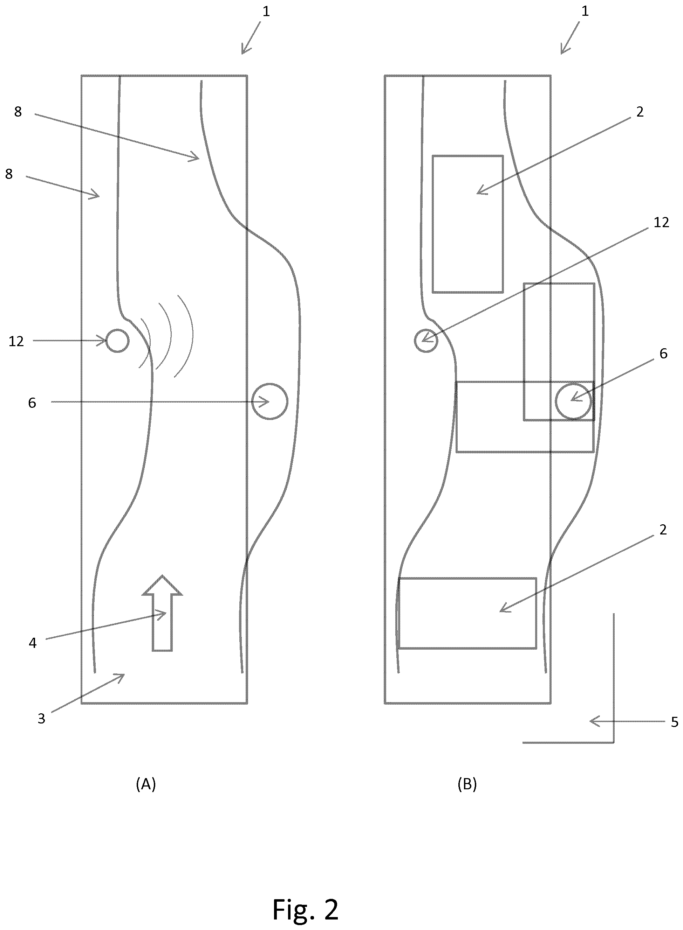

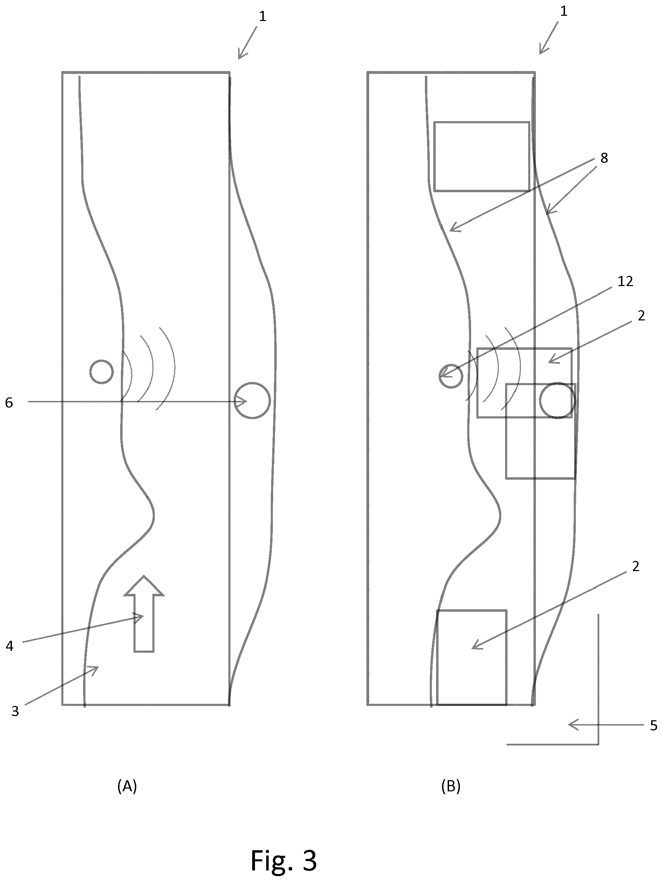

Dans certains modes de réalisation du dispositif d'orientation 1, il comprend, en outre, un détecteur 12, situé sensiblement en vis-à-vis du bloc 6, pour détecter dans l'environnement proche dudit détecteur 12 la présence ou l'absence de produit 2, de sorte à identifier l'exécution ou non d'une rotation. La figure 2 montre notamment que l'exécution correcte de la rotation est associée à la non détection d'un produit 2, alors que, à la figure 3, la bonne exécution de la rotation est associée à la détection du produit 2. Ce détecteur 12 est capable de détecter une substance dans son environnement proche, et il est donc orienté en direction du canal dans lequel circulent les produits 2, délimité par le guide 8 sous forme de deux parois complémentaires. Le détecteur 12 est placé du côté de la partie du produit 2 qui est entraînée par le moyen de convoyage 3, c'est-à-dire du côté opposé à celui où se trouve le bloc 6 formant point fixe longitudinalement.

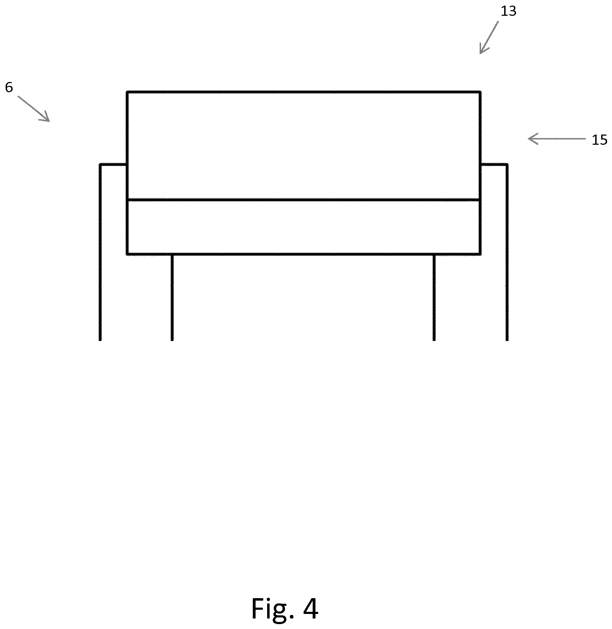

Selon une caractéristique additionnelle possible, le bloc 6 comprend, dans sa partie supérieure en contact momentané avec les produits 2, un tampon 13 démontable et facilement séparable du reste du bloc 6 pour un renouvellement facile en cas d'usure prononcée. La figure 4 montre par exemple un tampon 13 placé au niveau de la partie d'extrémité 15 et comprenant un socle pour une interaction par exemple magnétique avec le reste du bloc 6 ainsi qu'une surface de contact pour l'interaction avec le produit 2. Le tampon 13 forme donc un insert démontable et changeable, enfiché dans le reste du bloc 6.

L'invention a aussi pour objet un procédé mettant en œuvre le dispositif tel que décrit ci-dessus, à savoir un procédé d'orientation de produits 2 qui circulent dans un plan de convoyage 5 grâce à un moyen de convoyage 3 sur la surface supérieure duquel ils reposent, procédé au cours duquel lesdits produits 2 sont, de façon sélective, tournés autour d'un axe 7 perpendiculaire au plan de convoyage 5, ledit procédé comprenant pour ce faire une étape de manœuvre d'un moyen d'action comprenant un bloc 6 mobile et au cours de laquelle ledit bloc 6 mobile passe d'une position inactive, dans laquelle il n'interagit pas avec les produits 2, à une position active, dans laquelle il interagit avec eux pour en provoquer la rotation.

Selon l'invention, la manœuvre du moyen d'action consiste essentiellement à faire traverser le plan de convoyage 5 au bloc 6, de sorte que, dans sa position inactive, il se trouve escamoté sous le plan de convoyage 5, et, dans sa position active, il s'étend du même côté du plan de convoyage 5 que les produits 2 pour toucher par l'extérieur le fond du produit 2 à faire tourner, c'est-à-dire toucher la surface inférieure 14 en retenant le produit 2 par friction sur le bloc 6.

Le bloc 6 empêche alors, en position active, la progression longitudinale à cet endroit du produit 2 sous l'effet du seul moyen de convoyage 3. La position active du bloc 6 amène sa surface supérieure, dédiée au contact avec le produit 2, à une distance du plan de convoyage 5 qui peut être ajustée en fonction de la dimension du produit 2 : pour un produit 2 présentant une faible dimension transversale, le bloc 6 dépassera le plan de convoyage 5 d'une distance inférieure à celle pour un produit 2 avec une plus grande dimension transversale.

En décalant le produit 2 du moyen de convoyage 3, une grande partie de la surface inférieure 14 n'est plus en contact avec le moyen de convoyage 3 ce qui permet de provoquer un couple de rotation entre la partie encore en contact avec le moyen de convoyage 3 et la partie longitudinalement fixe, formée par le bloc 6.

Selon une caractéristique avantageuse, la rotation du produit 2 autour de l'axe 7 perpendiculaire au plan de convoyage 5 s'accompagne d'une rotation du bloc 6 autour du même axe, ledit bloc 6 et le produit 2 étant en contact normalement sans mouvement relatif entre eux. La surface du bloc 6 qui est en contact avec le produit 2 est donc préférablement symétrique par rapport à l'axe de rotation du bloc 6.

Enfin, dans des modes de réalisation possibles, la manœuvre du moyen d'action est pilotée par une unité de contrôle et tient compte notamment de la taille des produits 2, en particulier la taille observée perpendiculairement au plan de convoyage 5 et/ou de la cadence du moyen de convoyage 3 et/ou de la rotation effectuée par le produit 2 et détectée, pour notamment déclencher le passage de la position inactive à la position active, et/ou pour déclencher ensuite le passage de la position active à la position inactive, et/ou pour définir la vitesse de déplacement du bloc 6 perpendiculairement au plan de convoyage 5 dans l'un et/ou l'autre de ces mouvements.

Il est ainsi possible de contrôler de façon précise la durée de sortie du bloc 6 au cours de laquelle il interagit avec le fond du produit 2, mais aussi les vitesses de sortie ou de rentrée, qui ont un effet sur le contrôle du mouvement du produit 2 lors de ces phases. Le mouvement du bloc 6 peut ainsi être ajusté avec précision en fonction du produit 2, en particulier en termes de rigidité, poids, dimensions, etc. Le moyen d'action est ainsi facile à adapter aux nouveaux formats de produits 2 pour une action efficace sur chaque format de produit 2.

La figure 2 montre en particulier un moyen de convoyage 3 sous forme de convoyeur 3 du type à bande sans fin sur la surface supérieure duquel les produits 2 reposent. La surface supérieure de ce convoyeur 3 forme donc le plan de convoyage 5 dans lequel circulent les produits, le long d'une direction de convoyage 4 qui lui est parallèle. Les produits 2 sont du type carton, caisse, packs, ou autres, et leur base en contact avec le convoyeur 3 a une forme de rectangle non carré. De tels produits 2 peuvent donc circuler dans la direction de convoyage 4 avec le grand côté de leur base parallèle à la direction de convoyage 4 ou avec ledit grand côté perpendiculaire à la direction de convoyage 4. Un des objets de l'invention est de proposer un moyen efficace pour faire passer les produits 2 d'une de ces deux positions à l'autre.

Il est ainsi proposé de prévoir un élément mobile formant un bloc 6, mobile perpendiculairement au plan de convoyage 5, c'est-à-dire généralement verticalement, pour venir coopérer avec la surface inférieure 14 des produits 2. Ce bloc 6 ne suit pas le mouvement des produits 2 dans la direction de convoyage 4. Il est cependant mobile à travers le plan de convoyage 5.

En effet, dans une première position, ou position inactive, le bloc 6 est rétracté et se trouve hors de la zone de passage des produits 2 et n'a donc aucune interaction mécanique avec les produits 2. Les produits 2 évoluent ainsi d'un côté du plan de convoyage 5, alors que le bloc 6 se trouve de l'autre côté. Le plan de convoyage 5 étant essentiellement horizontal, les produits 2 se trouvent au dessus du plan de convoyage 5, alors que le bloc 6, dans sa position inactive, se trouve entièrement sous le plan de convoyage 5.

Dans une deuxième position, ou position active, le bloc 6 est développé et débouche dans la zone de passage des produits 2, créant alors une interaction mécanique avec les produits 2. Le bloc 6 débouche donc au moins en partie du même côté du plan de convoyage 5 que celui où se trouvent les produits 2. Bien entendu, le bloc 6 peut conserver une partie située de l'autre côté. Etant immobile longitudinalement, c'est-à-dire dans la direction de convoyage 4, le bloc 6 forme un point fixe pour les produits 2.

En position active, le bloc 6 coopère avec la surface inférieure 14 du produit 2, grâce à laquelle ledit produit 2 repose sur une surface mobile qui l'entraîne, à l'inverse des systèmes à base de butée qui coopère avec une zone frontale du produit 2 s'étendant perpendiculairement et qui s'oppose frontalement et localement à la progression du produit 2. De telles butées créent une force dans la direction de convoyage 4 qui peut générer des chocs dommageables pour les produits 2 ou leurs composants. Comparativement, un bloc 6 conformément à l'invention forme temporairement, pour la surface inférieure 14 du produit 2, une surface d'appui immobile dans la direction de convoyage 4, alors que le produit 2 continue à être entraîné par ailleurs par le convoyeur 3 avec lequel une autre partie de sa surface inférieure 14 est en contact.

Préférablement, le bloc 6 ne passe donc pas en position active avant que le produit 2 n'arrive à sa hauteur, de sorte à éviter de former une butée frontale. C'est donc lorsque le produit 2 arrive au droit du bloc 6 que celui-ci est manœuvré pour passer de sa position inactive, où le produit 2 est entraîné uniquement par le convoyeur 3 à sa position active, où la surface inférieure 14 du produit 2 repose tant sur une portion fixe dans la direction de convoyage 4, à savoir l'extrémité du bloc 6, que sur une portion mobile dans la direction de convoyage 4, à savoir le convoyeur 3.

Le bloc 6 a donc une partie d'extrémité qui arrive en contact avec le fond extérieur des produits 2, ou surface inférieure 14. Comme le bloc 6 dépasse légèrement le plan de convoyage 5, le produit 2 vient à être soulevé et sa surface inférieure 14 n'est donc plus rigoureusement parallèle au plan de convoyage 5, mais forme avec lui un léger angle. La rigidité du produit 2 détermine la portion de surface inférieure 14 qui reste en contact avec le convoyeur 3, mobile par rapport au bloc 6 dans la direction de convoyage 4. On comprend que le fait, pour le produit 2, d'être, d'une part, pour une partie de sa surface inférieure 14, en appui sur le bloc 6, immobile dans la direction de convoyage 4, et, d'autre part, pour une autre partie de sa surface inférieure 14, en appui sur le convoyeur 3 mobile dans la direction de convoyage 4, crée un mouvement de rotation du produit 2 autour d'un axe perpendiculaire au plan de convoyage 5. C'est donc cette rotation qui permet de faire passer le produit 2 à base rectangulaire d'une orientation en longueur à une orientation en largeur.

La durée pendant laquelle le produit 2 se trouve tant entraîné par le convoyeur 3 que retenu par le dessous par le bloc 6 détermine l'amplitude de la rotation. Une solution de manœuvre contrôlée du bloc 6 à partir de moteur électrique sera décrite plus tard.

Préférablement, au moins une partie du bloc 6 peut suivre la rotation que subit le produit 2 lorsque le bloc 6 est en position active. Le bloc 6 ou au moins sa partie supérieure peut donc être libre en rotation, laissant ainsi le déplacement du convoyeur 3 générer la rotation du produit 2 pendant toute la période de temps au cours de laquelle le bloc 6 est en position active et forme un point fixe autour duquel le produit 2 se met à tourner.

Le bloc 6 peut donc être muni d'un patin libre en rotation autour de l'axe perpendiculaire au plan de convoyage 5 et qui vient en contact avec la surface inférieure 14 du produit 2 et se trouve pour cela au niveau de l'extrémité supérieure dudit bloc 6. Le bloc 6 peut être aussi entièrement monté libre en rotation autour de cet axe sur un support adéquat.

Le bloc 6 se trouve donc préférablement décalé par rapport au centre de gravité des produits 2, de sorte que son passage en position active n'a pas pour effet de décaler tout le produit 2 du convoyeur 3, mais uniquement de le pencher. Dans une réalisation simple, le bloc 6 se trouve à côté du convoyeur 3, et il suffit alors, pour son implantation, de fixer sur le côté du convoyeur 3 un module correspondant. Les produits 2 sont alors décalés transversalement depuis une position où ils reposent entièrement sur le convoyeur 3 à une position où ils s'étendent transversalement au-delà dudit convoyeur 3, et ce grâce à un guide 8 adéquat. En effet, la position des produits 2 au fil de leur déplacement par le convoyeur 3 est conditionnée par un guide 8 s'étendant le long du convoyeur 3. Le guide 8 comprend deux éléments de guidage qui se font face et délimite la position des produits 2 dans la direction transversale à la direction de convoyage 4. Avec un bloc 6 situé au-delà de la section transversale du convoyeur 3, le guide 8 a donc un élément de guidage du côté où se trouve le bloc 6, et un élément de guidage du côté opposé. Pour amener les produits 2 au dessus du bloc 6 il suffit alors de prévoir un guide 8 qui délimite entre ses deux éléments de guidage qui se font face, un couloir de guidage qui se décale progressivement depuis la partie centrale du convoyeur 3 et jusqu'à déborder au droit du bloc 6. Comme le montre la figure 5, les produits 2 ne sont donc que partiellement en contact avec le convoyeur 3 lorsqu'ils approchent du bloc 6. Au moment où les produits 2 arrivent au droit du bloc 6 pour être soulevés par lui, ils s'étendent donc en porte à faux transversalement au-delà de la surface du convoyeur 3. Après l'opération du bloc 6 et la rotation du produit 2 correspondante, il suffit ensuite que le guide 8 soit positionné avec une forme apte à ramener l'intégralité du produit 2 sur le convoyeur 3. Le guide 8 est bien entendu préférablement de forme adaptée à, tout d'abord, pousser transversalement les produits 2 pour les amener au dessus du bloc 6, puis à permettre la rotation du produit 2, puis à ramener les produits 2 pour que toute leur surface inférieure 14 soit à nouveau sur le convoyeur 3.

Le bloc 6 est donc manœuvrable de façon contrôlé entre la position rétractée où il ne vient pas au contact des produits 2 et la position de travail ou position active où il est en contact avec la surface inférieure 14 du produit 2 pour créer un point fixe dans la direction de convoyage 4, autour duquel peut pivoter le produit 2 qu'il aura décalé verticalement. Le déplacement du bloc 6 perpendiculairement au plan de convoyage 5 se fait préférablement à l'aide d'un actionneur contrôlé, notamment un moteur 10 synchrone, qui entraîne en rotation un excentrique 9 qui viendra, à son tour, créer le mouvement linéaire du bloc 6. La rotation contrôlée du moteur 10 dans un sens provoque alors le déplacement du bloc 6 dans un sens, alors que la rotation du moteur 10 en sens inverse provoque le déplacement du bloc 6 dans le sens inverse. En contrôlant l'amplitude du mouvement du moteur 10, on peut donc contrôler de façon précise le mouvement du bloc 6 en amplitude, mais aussi en vitesse de déplacement.

Le moteur 10 est ainsi piloté par une unité de contrôle qui définit les paramètres de son mouvement de sorte à obtenir la manœuvre souhaitée du bloc 6, notamment en fonction de l'arrivée des produits 2 détectée par une cellule en amont, de leur vitesse, de leur espacement, mais aussi de leur position, de leur géométrie, etc. La possibilité de contrôle précis qu'offre une solution d'actionnement à partir d'un moteur 10 synchrone ou « brushless », permet ainsi de contrôler précisément l'instant où le bloc 6 arrive en position active contre le fond du produit 2, mais aussi la durée de ce contact au cours duquel le produit 2 tourne sous l'effet du convoyeur 3 qui emporte la partie du produit 2 en contact avec lui. Il est ainsi possible de contrôler aussi précisément, d'une part, la vitesse avec laquelle le bloc 6 arrive au contact du produit 2, ce qui évite des chocs dommageables sur des produits 2 fragiles mais aussi de perdre le contrôle des produits 2 ayant trop peu de poids et d'inertie, et, d'autre part, la vitesse avec laquelle le bloc 6 se dégage du contact avec le produit 2. Il est en effet souhaitable de ramener le bloc 6 en position inactive à une vitesse supérieure à celle de la chute du produit 2 sous l'effet de son propre poids, ce afin de garantir qu'à partir du début de la manœuvre du bloc 6 pour son retour en position inactive, le produit 2 ne subit plus aucune rotation puisqu'il n'est alors plus en appui sur la surface longitudinalement fixe que forme le haut du bloc 6. En outre, un contrôle précis de la durée du contact entre le bloc 6 et le produit 2 est nécessaire pour contrôler de façon précise l'angle de rotation que provoque le convoyeur 3 pendant cette durée.

Bien entendu, il est possible d'utiliser une telle solution de rotation de produit 2 de façon sélective, pour tourner seulement certains produits 2 qui circulent et non pas tous les produits 2 systématiquement. Le dispositif peut alors être utilisé pour orienter des produits 2 sous forme de caisse, carton, packs, ou autres, en vue de l'organisation en couche à palettiser ou pour une suremballeuse, par exemple.

On notera qu'un tel système est utilisable pour tourner d'un quart de tour des produits 2 qui sont orientés avec, dans la direction de convoyage 4, soit la grande longueur de leur base, soit la petite. La mesure de l'effet, sur le produit 2, du contact avec le bloc 6 peut se faire avec un détecteur 12 placé en vis-à-vis du bloc 6, comme le montre la figure 2 ou encore 3.

Cette figure montre en effet un détecteur 12 positionné du côté du convoyeur 3 opposé à celui où se trouve le bloc 6. Ce détecteur 12 peut détecter des objets passant dans son environnement immédiat, avec un champ de détection en direction du bloc 6.

Dans les cas où les produits 2 circulent, en amont du bloc 6, avec la grande dimension de leur base transversale à la direction de convoyage 4, ce détecteur 12 détecte alors les produits 2 qui n'ont pas été tournés par l'action du bloc 6, ou pas assez. Le signal émis par ce détecteur 12 est alors pris en compte par l'unité de contrôle pour conserver le bloc 6 en position active, pour prolonger encore l'effet de bras de levier du convoyeur 3 mobile : la détection d'un produit 2 représente l'éventuelle nécessité de continuer à le faire tourner et donc à maintenir le bloc 6 en position active ; la non détection représente la nécessité de ramener le bloc 6 en position inactive pour arrêter la rotation du produit 2.

Dans le cas contraire, où les produits 2 circulent, en amont du bloc 6, avec la petite dimension de leur base transversale à la direction de convoyage 4, ce détecteur 12 détecte les produits 2 qui ont été tournés par l'action du bloc 6. La détection, par le détecteur 12, d'un produit 2, signifie qu'il est nécessaire d'amener le bloc 6 en position inactive, sous peine de provoquer une rotation excessive ; alors que la non détection signifie qu'il est nécessaire de maintenir le bloc 6 en position active pour continuer à faire tourner le produit 2.

Bien entendu, la portée du détecteur 12 est ajustée en fonction de la dimension des produits 2.

De façon alternative ou additionnelle, le dispositif peut être muni d'une solution de mesure de la rotation du bloc 6, représentant donc directement l'angle de la rotation du produit 2 et pouvant à ce titre être prise en compte par l'unité de contrôle pour piloter la rétractation du bloc 6.

Le dispositif peut aussi être muni d'une solution de détection des produits 2 en amont, pour synchroniser le fonctionnement du bloc 6 avec le débit de produits 2 et leur espacement.

Le bloc 6 est manœuvré pour passer en position active sans risquer de former un butée frontale, et donc alors que le produit 2 est déjà au droit dudit bloc 6. Ce dernier arrive donc simplement au contact du fond extérieur du produit 2 et le soulève pour l'incliner, sans former de butée stoppant violemment la progression du produit 2. Le produit 2 est donc en mouvement dans la direction de convoyage 4 lorsque le bloc 6 arrive au contact de sa surface inférieure, ce qui peut provoquer une usure de la surface de contact du bloc 6 au fil des cycles de rotation de produits 2 successifs. Pour cela, au moins une partie du bloc 6 comprenant la surface de contact avec les produits 2 est démontable pour un changement en cas d'usure prononcée. Dans une réalisation possible, illustrée notamment à la figure 4, le bloc 6 présente dans sa partie d'extrémité 15 venant au contact des produits 2, d'un patin ou tampon 13 démontable du reste du bloc 6. Le patin 13 peut par exemple avoir un ancrage par aimantation dans le bloc 6, ce qui le rend aisément séparable du reste du bloc 6.

Comme le montre la figure 1, le bloc 6 est monté à l'extrémité d'un arbre, en aval de l'excentrique 9 et guidé dans un mouvement perpendiculaire au plan de convoyage 5. Le bloc 6 est alors monté sur cet arbre libre en rotation autour d'un axe perpendiculaire au plan de convoyage 5. Le bloc 6 peut être monté sur cet arbre avec ou sans roulement, dans le but de réduire à son minimum possible, le couple résistif que le convoyeur 3 doit vaincre pour faire tourner le produit 2 autour d'un point fixe formé par le bloc 6.

On comprend que grâce à l'invention, il est possible d'obtenir une solution de rotation de produits 2 en cours de convoyage qui soit contrôlable avec précision pour les vitesses de contact, de dégagement, les instant et durée de contact, et qui évite aussi les chocs sur les produits 2, en particulier les chocs frontaux mais aussi verticaux, lors du soulèvement et de la descente du produit 2.

Dans des modes de réalisation particuliers, le moyen de convoyage 3 comprend un convoyeur à bande sans fin, montée mobile autour d'une sole de glissement, ou plaque fixe. Cette plaque se trouve donc légèrement sous le brin supérieur de la bande. La bande est cependant moins large que la plaque elle-même, découvrant alors transversalement une partie de ladite plaque, sur le côté. La section de ce moyen de convoyage 3 est donc formée d'une portion de plaque couverte par la bande, et d'une portion où la plaque est nue. Un orifice de passage peut alors être aménagé dans la partie nue de cette plaque, pour laisser circuler le bloc 6 à travers lui. Le bloc 6 se trouve monté pour circuler à travers la partie de la plaque qui n'est pas recouverte, sur le côté de la bande sans fin.

Etant décalée par rapport au brin supérieur de la bande sans fin du moyen de convoyage 3, la plaque support n'est normalement pas en contact avec les produits 2.

Le bloc 6 se trouve donc à côté de la partie motrice du moyen de convoyage 3, à savoir la bande mobile. Il s'étend cependant depuis sous la sole de glissement ou plaque fixe dudit moyen de convoyage 3. Les moyens d'entraînement, c'est-à-dire le moteur 10, la transmission 11, l'excentrique 9, et autres, peuvent bien entendu eux aussi être logés sous le moyen de convoyage 3, à savoir sous la sole ou plaque fixe.

La portion nue de la plaque fixe peut aussi présenter une fente longitudinale, qui se trouve en amont du bloc 6 et sur laquelle passent alors les produits 2 successifs avant d'arriver sur ledit bloc 6. Cette fente permet de faire passer le faisceau de détection d'un détecteur placé sous le plan de convoyage 5 et qui détecte les produits 2 qui approchent du bloc 6, ce qui permet d'avoir un contrôle très précis du mouvement du bloc 6, parfaitement adapté à l'avancement des produits 2, avec une solution de détection masquée, essentiellement sous le moyen de convoyage 3.

En amont, voire aussi en aval, de cette portion du moyen de convoyage 3 montrant transversalement la succession d'une bande de convoyage et d'une plaque fixe support, le dispositif peut bien entendu présenter un convoyeur formant à nouveau toute la largeur et ne laissant donc plus apparaître sa plaque support. Autrement dit, dans la zone du bloc 6, le moyen de convoyage 3 ne s'étend pas transversalement au-delà du bloc 6, mais il peut le faire en amont et/ou en aval de cette zone.

L'usage d'un moteur 10 continu, autrement nommé « brushless », permet un contrôle très précis du mouvement du bloc 6 : instant exact de la levée du bloc 6 pour le positionner à un endroit prédéfini du produit 2, instant exact de la descente, et donc durée de l'état actif du bloc 6, vitesse de montée et descente, etc. Cela contribue à rendre le dispositif compatible avec tout type de produit 2, puisqu'une modification de réglage suffit pour obtenir la rotation souhaitée pour le produit 2 particulier.

Le bloc 6 passe entre sa position active et sa position escamotée normalement à chaque produit 2, puisqu'il ne vient pas s'opposer au front du produit 2, mais uniquement contre la surface de fond. Le bloc 6 passe donc de fçon régulière et dynamique entre les deux états.

En créant un appui immobile longitudinalement pour le produit 2, tout en étant libre en rotation autour de l'axe de rotation 7, le bloc 6 permet au moyen de convoyage 3, qui n'agit alors que sur la partie du fond du produit 2 qui est opposée transversalement au bloc 6, et encore entraînée, de créer un couple de rotation autour de cet axe.

Dans certains modes de réalisation, le guide longitudinal 8, qui sert de référencement à l'approche du bloc 6, présente une discontinuité à hauteur du bloc 6. Il s'arrête donc un peu avant le bloc 6 et reprend un peu après, ce qui libère la place nécessaire pour la rotation des produits 2, dans les cas où le bloc 6 n'arrive pas sous le produit 2 au niveau du coin le plus en aval et proche du guide longitudinal 8. Le guide longitudinal 8 est présent en aval du bloc 6, en particulier pour former une surface de référencement qui vient arrêter le produit 2 en fin de rotation. Cela évite que le produit 2 ne subisse une rotation excessive, et garantit sa position suite au retournement opéré par le dispositif. L'extrémité amont de la partie du guide longitudinal 8 qui est en aval du bloc 6 peut former une pointe.

Comme il ressort de ce qui a été dit plus haut, le bloc 6 se trouve au-delà de la partie motrice du moyen de convoyage 3, et forme un point fixe autour duquel ladite partie motrice du moyen de convoyage 3 va faire tourner le produit 2. Le bloc 6 étant préférablement libre en rotation, c'est son axe de rotation 7 qui est fixe longitudinalement. Ainsi, le produit 2 arrive au dessus de l'axe de rotation 7 du bloc 6, ce qui permet à la libre rotation du bloc 6 d'accompagner la rotation du produit 2, mais pas d'accompagner un mouvement longitudinal du produit 2, puisque celui-ci repose aussi sur l'axe de rotation 7. La rotation du bloc 6 suit donc la rotation du produit 2 et il n'y a normalement pas de mouvement relatif entre eux.

A l'approche du bloc 6, le guide longitudinal 8, servant de référence de position du produit 2, est donc décalé de la partie motrice du moyen de convoyage 3. Le dispositif d'orientation 1 est donc muni d'un moyen garantissant que les produits 2 viennent contre la paroi correspondante dudit guide. Ce moyen peut être réalisé de différentes façons, comme une contre paroi qui crée un canal dans lequel le produit 2 évolue, voir les figures, ou encore des rouleaux poussoirs transversaux, qui présentent l'avantage d'être compatibles avec tout type et toute dimension de produits 2. Il s'agit donc d'intégrer un moyen exercant une force latérale sur les produits 2 pour les amener contre le guide longitudinal 8, qui va les placer transversalement au bon endroit par rapport au bloc 6. Des rouleaux du genre susmentionné peuvent être intégrés dans le convoyage des produits 2 en amont.

Dans certains modes de réalisation possibles, plusieurs dispositifs d'orientation 1 sont montés côte à côte, avec éventuellement leurs blocs 6 au niveau de la zone centrale qui les sépare.

Avec l'invention tel que décrite ci-dessus, le dispositif est particulièrement ergonomique et simple, compatible avec un très grand nombre de produits 2.

## Revendications

1. Dispositif d'orientation (1) de produits (2) comprenant, d'une part, un moyen de convoyage (3) pour déplacer, dans une direction de convoyage (4) longitudinale, lesdits produits (2) reposant sur lui par leur partie inférieure au niveau d'un plan de convoyage (5), et, d'autre part, un moyen d'action,
le moyen d'action comprenant un bloc (6) fixe dans la direction de convoyage (4) et mobile pour se déplacer à travers le plan de convoyage (5) entre une position rétractée entièrement sous le plan de convoyage (5) et une position active, formant, de façon sélective, par sa partie supérieure, une surface en contact avec le dessous des produits (2),
le moyen d'action se trouve à côté du moyen de convoyage (3), transversalement à la direction de convoyage (4), créant sur le produit (2) un différentiel de vitesse longitudinale provoquant sa rotation autour d'un axe (7) perpendiculaire au plan de convoyage (5)
**caractérisé en ce que** le dispositif d'orientation (1) comprend en outre un guide longitudinal (8), positionné pour pousser transversalement les produits (2) en direction du moyen d'action, de sorte qu'au moins une partie d'entre eux en arrive à circuler à hauteur du bloc (6),
ledit guide longitudinal (8) étant de forme adaptée pour décaler au-delà de la surface de convoyage les produits (2) à faire tourner.

2. Dispositif d'orientation (1) selon la revendication 1, où
le bloc (6) est mobile, en outre, par rotation autour d'un axe de rotation (7) perpendiculaire au plan de convoyage (5).

3. Dispositif d'orientation (1) selon la revendication 1, où
le moyen d'action comprend, en outre, un capteur pour mesurer la rotation du bloc (6) autour de son axe de rotation (7).

4. Dispositif d'orientation (1) selon l'une quelconque des revendications 1 à 3, où
le moyen d'action comprend, d'une part, un moteur (10) électrique piloté assurant le mouvement du bloc (6) perpendiculairement au plan de convoyage (5), et, d'autre part, une transmission (11) de mouvement utilisant un excentrique (9) pour transformer la rotation du moteur (10) en mouvement linéaire du bloc (6), l'ensemble formé du moteur (10), de la transmission (11) et du bloc (6) étant monté sur le côté du moyen de convoyage (3).

5. Dispositif d'orientation (1) selon l'une quelconque des revendications 1 à 4, **caractérisé en ce que**
il comprend, en outre, un détecteur (12), situé sensiblement en vis-à-vis du bloc (6), pour détecter dans l'environnement proche dudit détecteur (12) la présence ou l'absence de produit (2), de sorte à identifier l'exécution ou non d'une rotation.

6. Dispositif d'orientation (1) selon l'une quelconque des revendications 1 à 5, **caractérisé en ce que**
le bloc (6) comprend, dans sa partie supérieure en contact momentané avec les produits (2), un tampon (13) démontable et facilement séparable du reste du bloc (6).

7. Procédé d'orientation de produits (2) qui circulent dans un plan de convoyage (5) grâce à un moyen de convoyage (3) sur la surface supérieure duquel ils reposent, procédé au cours duquel lesdits produits (2) sont, de façon sélective, tournés autour d'un axe (7) perpendiculaire au plan de convoyage (5), ledit procédé comprenant pour ce faire une étape de manoeuvre d'un moyen d'action comprenant un bloc (6) mobile et au cours de laquelle ledit bloc (6) mobile passe d'une position inactive, dans laquelle il n'interagit pas avec les produits (2), à une position active, dans laquelle il interagit avec eux pour en provoquer la rotation,
la manoeuvre du moyen d'action consistant essentiellement à faire traverser le plan de convoyage (5) au bloc (6), de sorte que, dans sa position inactive, il se trouve escamoté sous le plan de convoyage (5), et, dans sa position active, il s'étend du même côté du plan de convoyage (5) que les produits (2) pour toucher par l'extérieur le fond du produit (2) à faire tourner, procédé **caractérisé en ce qu'**il est mis en œuvre par le dispositif d'orientation (1) selon l'une des revendications précédentes.

8. Procédé selon la revendication 7, où
la rotation du produit (2) autour de l'axe (7) perpendiculaire au plan de convoyage (5) s'accompagne d'une rotation du bloc (6) autour du même axe, ledit bloc (6) et le produit (2) étant en contact normalement sans mouvement relatif entre eux.

9. Procédé selon l'une quelconque des revendications 7 ou 8, où
la manœuvre du moyen d'action est pilotée par une unité de contrôle et tient compte notamment de la taille des produits (2), en particulier la taille observée perpendiculairement au plan de convoyage (5) et/ou de la cadence du moyen de convoyage (3) et/ou de la rotation effectuée par le produit (2) et détectée.

## Patentansprüche

1. Vorrichtung (1) zur Ausrichtung von Artikeln (2), die einerseits ein Fördermittel (3), um die in Bezug auf eine Förderebene (5) mit ihrer unteren Seite auf ihm aufliegenden Artikel (2) in einer Längsförderrichtung (4) zu bewegen, und andererseits ein Aktionsmittel beinhaltet,
wobei das Aktionsmittel einen Block (6) beinhaltet, der in der Förderrichtung (4) ortsfest ist und mobil ist, um sich durch die Förderebene (5) hindurch zwischen einer eingefahrenen Position komplett unterhalb der Förderebene (5) und einer aktiven Position zu bewegen, sodass er durch seine obere Seite selektiv eine Oberfläche in Kontakt mit der Unterseite der Artikel (2) bildet,
wobei sich das Aktionsmittel quer zur Förderrichtung (4) neben dem Fördermittel (3) befindet und an dem Artikel (2) unterschiedliche Längsgeschwindigkeiten hervorruft, was dessen Drehung um eine zur Förderebene (5) senkrechte Achse (7) bewirkt,
**dadurch gekennzeichnet, dass**
die Ausrichtvorrichtung (1) ferner eine Längsführung (8) beinhaltet, die positioniert ist, um die Artikel (2) quer in Richtung des Aktionsmittels zu verschieben, sodass mindestens ein Teil von ihnen schließlich auf Höhe des Blocks (6) zirkuliert,
wobei die Längsführung (8) eine Form aufweist, die dazu ausgelegt ist, die zu drehenden Artikel (2) über die Förderoberfläche hinaus zu verlagern.

2. Ausrichtvorrichtung (1) nach Anspruch 1, wobei
der Block (6) ferner um eine Rotationsachse (7), die zur Förderebene (5) senkrecht ist, rotierbar ist.

3. Ausrichtvorrichtung (1) nach Anspruch 1, wobei
das Aktionsmittel ferner einen Sensor beinhaltet, um die Rotation des Blocks (6) um seine Rotationsachse (7) zu messen.

4. Ausrichtvorrichtung (1) nach einem der Ansprüche 1 bis 3, wobei
das Aktionsmittel einerseits einen angesteuerten Elektromotor (10), der die Bewegung des Blocks (6) senkrecht zur Förderebene (5) sicherstellt, und andererseits eine Bewegungsübertragungseinrichtung (11), die einen Exzenter (9) verwendet, um die Rotation des Motors (10) in eine lineare Bewegung des Blocks (6) umzuwandeln, beinhaltet, wobei die aus dem Motor (10), der Übertragungseinrichtung (11) und dem Block (6) gebildete Anordnung an der Seite des Fördermittels (3) befestigt ist.

5. Ausrichtvorrichtung (1) nach einem der Ansprüche 1 bis 4, **dadurch gekennzeichnet, dass**
sie ferner einen Detektor (12) beinhaltet, der im Wesentlichen gegenüber dem Block (6) angeordnet ist, um in der näheren Umgebung des Detektors (12) das Vorhandensein oder das Fehlen eines Artikels (2) zu detektieren, um festzustellen, ob eine Rotation ausgeführt werden soll oder nicht.

6. Ausrichtvorrichtung (1) nach einem der Ansprüche 1 bis 5, **dadurch gekennzeichnet, dass**
der Block (6) an seiner oberen Seite, die mit den Artikeln (2) vorübergehend in Kontakt ist, einen abnehmbaren und vom Rest des Blocks (6) leicht zu entfernenden Stempel (13) beinhaltet.

7. Verfahren zur Ausrichtung von Artikeln (2), die durch ein Fördermittel (3), auf dessen oberer Oberfläche sie aufliegen, in einer Förderebene (5) zirkulieren, wobei die Artikel (2) während des Verfahrens selektiv um eine zur Förderebene (5) senkrechte Achse (7) gedreht werden, wobei das Verfahren zu diesem Zweck einen Schritt der Betätigung eines Aktionsmittels beinhaltet, das einen mobilen Block (6) beinhaltet, und wobei während dieses Schritts der mobile Block (6) von einer inaktiven Position, in der er nicht mit den Artikeln (2) interagiert, in eine aktive Position, in der er mit ihnen interagiert, um ihre Rotation zu bewirken, übergeht,
wobei die Betätigung des Aktionsmittels im Wesentlichen daraus besteht, den Block (6) die Förderebene (5) durchqueren zu lassen, sodass er sich in seiner inaktiven Position zurückgefahren unterhalb der Förderebene (5) befindet und sich in seiner aktiven Position auf derselben Seite der Förderebene (5) wie die Artikel (2) erstreckt, um den Boden des zu drehenden Artikels (2) von außen zu berühren, wobei das Verfahren **dadurch gekennzeichnet** ist, das es durch die Ausrichtvorrichtung (1) nach einem der vorhergehenden Ansprüche umgesetzt wird.

8. Verfahren nach Anspruch 7, wobei
die Rotation des Artikels (2) um die zur Förderebene (5) senkrechte Achse (7) von einer Rotation des Blocks (6) um dieselbe Achse begleitet wird, wobei der Block (6) und der Artikel (2) in der Regel ohne eine relative Bewegung zwischen ihnen in Kontakt sind.

9. Verfahren nach einem der Ansprüche 7 oder 8, wobei die Betätigung des Aktionsmittels durch eine Steuereinheit angesteuert wird und insbesondere die Größe der Artikel (2), vor allem die senkrecht zur Förderebene (5) betrachtete Größe, und/oder den Arbeitstakt des Fördermittels (3) und/oder die durch den Artikel (2) ausgeführte und detektierte Rotation berücksichtigt.

## Claims

1. Device (1) for orienting products (2) comprising, on the one hand, a conveying means (3) for moving, in a longitudinal conveying direction (4), said products (2) resting thereon via their lower part at the level of a conveying plane (5) and, on the other, a means of action, the means of action comprising a unit (6) fixed in the conveying direction (4) and movable such as to be moved across the conveying plane (5) between an entirely retracted position under the conveying plane (5) and an active position, forming, selectively, via its upper part, a surface in contact with the underneath of the products (2),
the means of action is located beside the conveying means (3), transversely to the conveying direction (4), creating on the product (2) a longitudinal speed differential giving rise to the rotation thereof about an axis (7) perpendicular to the conveying plane (5),
**characterized in that**
the orientation device (1) further comprises a longitudinal guide (8) positioned such as transversely to push the products (2) in the direction of the means of action, in such a manner that at least some of them consequently then circulate at the height of the unit (6),
said longitudinal guide (8) being of a form adapted to offset, beyond the conveying surface, the products (2) to be turned.

2. Orientation device (1) according to Claim 1, wherein
the unit (6) is movable, furthermore, by rotation about a rotation axis (7) perpendicular to the conveying plane (5).

3. Orientation device (1) according to Claim 1, wherein
the means of action comprises, furthermore, a sensor for measuring the rotation of the unit (6) about its rotation axis (7).

4. Orientation device (1) according to any one of Claims 1 to 3, wherein
the means of action comprises, on the one hand, a controlled electric motor (10) moving the unit (6) perpendicularly to the conveying plane (5) and, on the other, a movement transmission device (11) using a cam (9) for converting the rotation of the motor (10) into a linear movement of the unit (6), the assembly formed by the motor (10), the transmission device (11) and the unit (6) being mounted on the side of the conveying means (3).

5. Orientation device (1) according to any one of Claims 1 to 4, **characterized in that**
it comprises, furthermore, a detector (12) located substantially facing the unit (6), for detecting in the close environment of said detector (12) the presence or the absence of product (2) in such a manner as to identify the execution or non-execution of a rotation.

6. Orientation device (1) according to any one of Claims 1 to 5, **characterized in that**
the unit (6) comprises, in its upper part in momentary contact with the products (2), a removable pad (13) easily separated from the rest of the unit (6).

7. Method for orienting products (2) that circulate in a conveying plane (5) by virtue of a conveying means (3) on the upper surface of which they rest, in the course of which method said products (2) are, selectively, turned about an axis (7) perpendicular to the conveying plane (5), said method comprising, to that end, a step of manoeuvring a means of action comprising a movable unit (6) and in the course of which step said movable unit (6) moves from an inactive position, in which it does not interact with the products (2), to an active position, in which it interacts with them in order to generate the rotation thereof,
the manoeuvring of the means of action consisting essentially in causing the unit (6) to traverse the conveying plane (5) in such a manner that, in its inactive position, it is retracted under the conveying plane (5) and, in its active position, it extends from the same side of the conveying plane (5) as the products (2) such as externally to touch the bottom of the product (2) to be turned, which method is **characterized in that** it is implemented by the orientation device (1) according to one of the preceding claims.

8. Method according to Claim 7, wherein
the rotation of the product (2) about the axis (7) perpendicular to the conveying plane (5) is accompanied by a rotation of the unit (6) about the same axis, said unit (6) and the product (2) being in contact normally without relative movement between them.

9. Method according to either of Claims 7 or 8, wherein
the manoeuvring of the means of action is controlled by a control unit and takes account notably of the size of the product (2), in particular the size observed perpendicularly to the conveying plane (5) and/or of the speed of the conveying means (3) and/or of the rotation effected by the product (2) and detected.
